# EUROPEAN PATENT SPECIFICATION

(11) **EP 0 424 652 B1**
(45) Date of publication and mention of the grant of the patent: **22.12.1993**
(21) Application number: 90117506.7
(22) Date of filing: 11.09.1990
(51) Int. Cl.: F16H 57/04, F16N 7/40, F01M 1/16

(54) **Oil passage in a transmission casing**
Ölkanal in einem Wechselgetriebegehäuse
Conduit d'huile dans un boîtier de transmission

(30) Priority: 30.09.1989 JP 256407/89
(43) Date of publication of application: 02.05.1991
(73) Proprietor: SUZUKI MOTOR CORPORATION, Shizuoka-ken (JP)
(72) Inventor: Ogawa, Masahiro, Hamamatsu-shi, Shizuoka-ken (JP)
(74) Representative: Klingseisen, Franz, Dipl.-Ing.

(56) References cited:
- EP-A- 0 264 970
- EP-A- 0 315 816
- US-A- 4 512 298
- US-A- 4 922 765

## Description

The invention relates to a transmission according to the preamble of claim 1.

EP-A-0 264 970 discloses a belt type continuously variable transmission of such a kind.

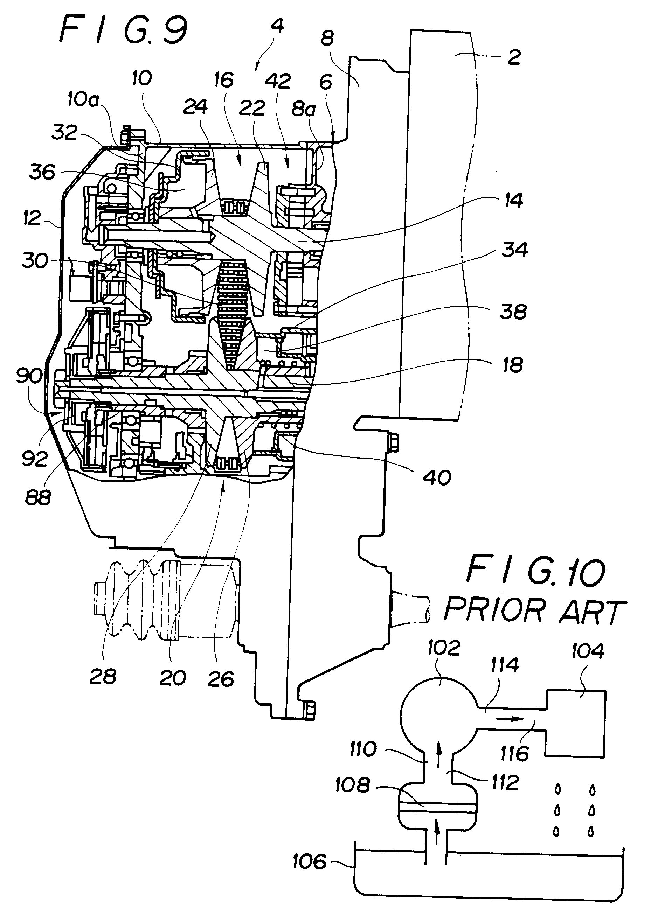

Vehicles such as automobiles are equipped with a transmission in order to convert driving force generated by the engine to a required form depending on the traveling state of such vehicle. There are various types of transmissions such as gear type, torque converter type and belt type. For example, in the belt type transmission, in order to convert engine driving force to a desired form by continuously varying the transmission gear ratio and taking off the same, the transmission, as shown in Figure 10, is provided with an oil pump 102 driven by the engine (not shown), and a valve body 104 for regulating oil discharged by this oil pump 102 to a predetermined pressure level. The oil pump 102 is provided with an oil intake passage 112, a starting end of which communicates with the interior of an oil pan 106 and a terminating end of which communicates with an intake passage 110 of the oil pump 102 through a filter 108. An oil feed passage 116 has a starting end which communicates with a discharge passage 114 of the oil pump 102 and a terminating end which communicates with the valve body 104.

Owing to the foregoing arrangement, the valve body 104 feeds oil, which has been regulated to a predetermined pressure level, to a required return oil feed part of a transmission (not shown) and returns surplus oil, which is generated when the oil is regulated to the predetermined pressure level, to the oil pan 106.

However, since the oil feed passage 116 of the conventional transmission returns surplus return oil, which has already been filtered, this clean return oil is mixed in the oil pan 106 with oil which is not yet filtered. Furthermore, the oil pump is required to again pump this clean return oil through the filter 108.

Because of the foregoing, the filtered oil cannot be effectively utilized and the oil pump work becomes heavy, causing an undesirable increase in pump driving torque. Furthermore, because bubbles are generated in the clean oil returned from the valve body 104, there arise inconveniences such as deterioration of pumping efficiency and generation of noises. Moreover, because the clean return oil is caused to pass through the filter again, the quantity of oil passing through the filter becomes large. As a result, it is necessary to increase the filter area, causing the overall apparatus to be large.

Furthermore, since the oil feed passage 116 for feeding oil to the valve body 104 from the oil pump, and the oil return passage for returning the surplus clean return oil from the valve body, are separately provided, the total height of the transmission becomes high.

It is therefore an object of the present invention to provide an oil passage of a transmission which is capable of effectively utilizing filtered oil, reducing pump intaking work to diminish torque for driving the pump, preventing bubbling of return oil to enhance pump efficiency and to reduce noise, reducing the quantity of oil passing through the filter to attain a small size owing to reduced filter area, and lowering the total height of the transmission to enhance the strength of the transmission.

This is achieved by a transmission having the features as defined in claim 1.

According to the preferred construction of the present invention, the pump manifold is provided with the oil feed passage for feeding oil discharged by the oil pump to the valve body and the oil return passage for returning surplus oil from the valve body to the oil intake passage on the downstream side of the filter. Accordingly, the filtered clean return oil can be prevented from being mixed with unfiltered oil, and the clean return oil does not pass through the filter again. Moreover, since the oil feed passage and the oil return passage are both disposed in the pump manifold, the total height of the transmission can be prevented from becoming high, as is caused by conventional separate provision of the oil feed passage and the oil return passage. The first and second case portions of the transmission can be connected with each other through the pump manifold which is provided with the oil feed passage and the oil return passage.

### BRIEF DESCRIPTION OF THE DRAWINGS

An embodiment of the present invention will be described in detail with reference to the drawings, in which:
Figure 1 is a schematic view showing the construction of the oil passage according to the invention;
Figure 2 is a schematic front view of the oil pump of Figure 1;
Figure 3 is a partial sectional view of the pump manifold of Figure 2;
Figure 4 is a front view of the pump manifold;
Figure 5 is a sectional view taken on line V-V of Figure 4;
Figure 6 is a bottom view of the pump manifold;
Figure 7 is a sectional view taken on line VII-VII of Figure 6 and rotated 90°;
Figure 8 is a rear view of the pump manifold;
Figure 9 is a partial sectional view of a belt type transmission according to the invention; and
Figure 10 is a view schematically showing a conventional construction of an oil passage of a conventional transmission.

### DETAILED DESCRIPTION

A belt type transmission, for example, is constructed such as shown in Figure 9. In Figure 9, the numeral 2 denotes an engine, and 4 a belt type transmission for taking off driving force of the engine 2 and then converting it to a required form by changing the gear ratio. This transmission 4 has a housing or case 6 which includes at least a first case portion 8 disposed on the side of the engine 2 and a second case portion 10 disposed oppositely across from the engine 2. The transmission 4 also has a side cover 12 mounted on the second case portion 10.

An input side shaft 14 is axially supported on first and second wall portions 8a and 10a of the first and second case portions 8 and 10, and is provided with a driving side pulley 16. Similarly, an output side shaft 18 is axially supported on the first and second wall portions 8a and 10a, and is provided with a driven side pulley 20.

The driving side pulley 16 comprises a driving side pulley element 22 fixed to the input side shaft 14, and a driving side movable pulley element 24 mounted on the shaft 14 such that the pulley element 24 can be moved in the axial direction but cannot be rotated relative to the shaft. The driven side pulley 20 comprises a driven side pulley element 28 fixed to the output side shaft 18 and a driven side movable pulley element 26 mounted on the output side shaft 18 such that the pulley element 26 can be moved in the axial direction but cannot be rotated relative to the shaft.

The driving side pulley 16 and the driven side pulley side 20 have a belt 30 looped therearound.

Mounted respectively on the driving side movable pulley element 24 and the driven side movable pulley element 26 are a driving side housing 32 and a driven side housing 34 which respectively form a driving side hydraulic oil chamber 36 and a driven side hydraulic oil chamber 38. The driven side hydraulic oil chamber 38, in turn, is provided with a spring 40 for urging the driven side movable pulley member 26 in a direction so as to expand the driven side hydraulic oil chamber 38.

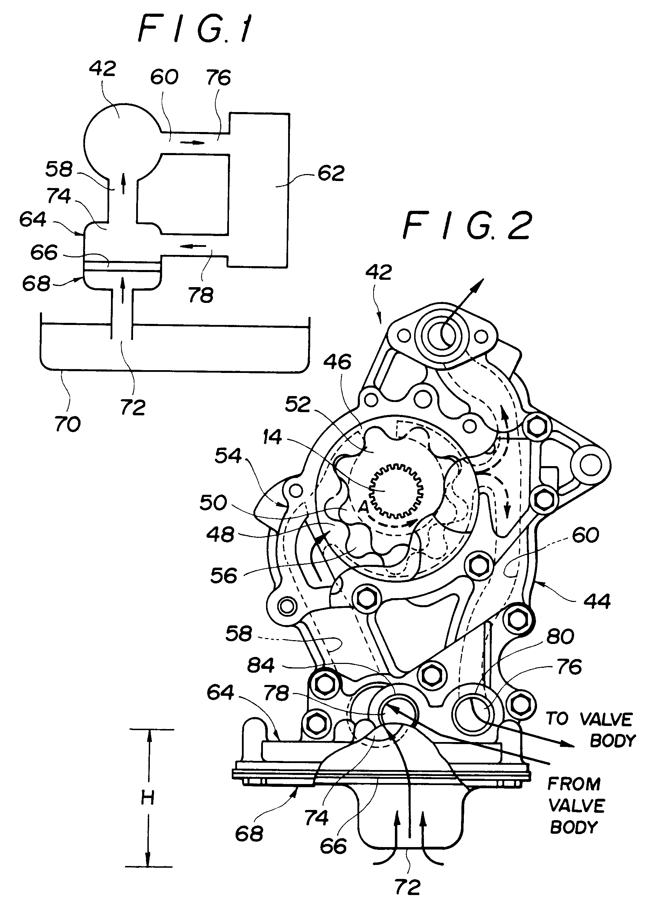

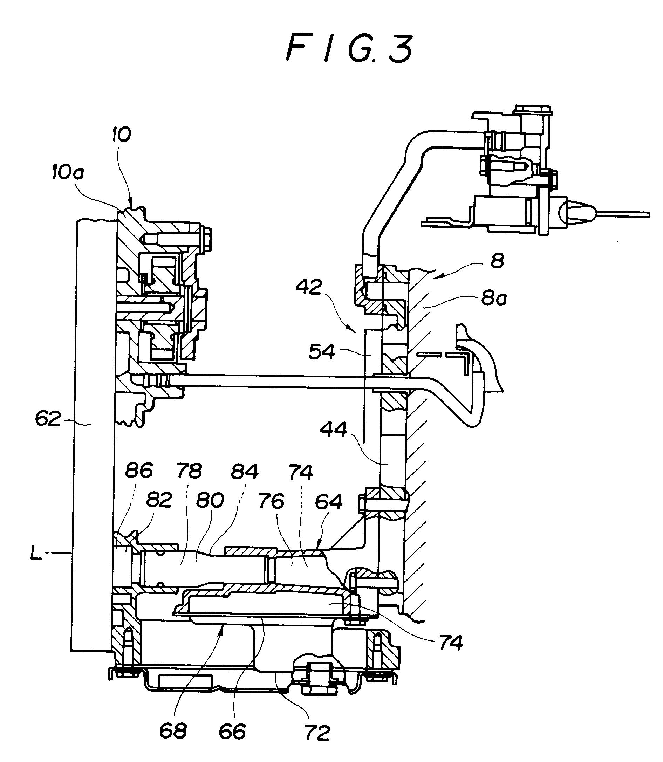

Mounted on the second case portion 10 adjacent the first wall portion 8a is an oil pump 42 as shown in Figures 2 and 3. The oil pump 42 comprises a pump housing 44 fixed mounted adjacent the first wall portion 8a of the first case portion 8, an outer rotor 46 rotatably mounted within the pump housing 44, and an inner rotor 52 which is fixed to and rotated by the input side shaft 14. An inner tooth portion 50 of inner rotor 52 is meshed with an outer tooth portion 48 of the outer rotor 46, and a pump cover 54 is mounted on the pump housing 44 in such a manner as to cover the outer rotor 46 and the inner rotor 52. Formed in the pump housing 44 are an intake passage 58 and a discharge passage 60 both communicating with an operating chamber 56 which is formed between the tooth portion 48 of the outer rotor 46 and the tooth portion 50 of the inner rotor 52. As the rotors 46 and 52 rotate, the volume of the operating chamber 56 is repeatedly contracted and expanded.

Also, mounted on the side cover 12 adjacent the second wall portion 10a is a valve body 62 for regulating oil discharged by the oil pump 42 to a predetermined pressure level. The oil pump 42 and the valve body 62 are disposed in generally parallel relation with the first and second case portions 8 and 10 as shown in Figure 3.

On a lower portion of the pump housing 44 of the oil pump 42, a pump manifold 64 is mounted as shown in Figures 2 and 3. Disposed beneath the pump manifold 64 is an oil strainer 68 which is provided with a filter 66 adapted to filter the oil. The oil strainer 68 is located in an oil pan 70 (Figure 1) disposed beneath the transmission case 6. The reference numeral 72 denotes an oil intake port.

The pump manifold 64 is provided with an oil intake passage 74 which communicates at a starting end thereof with the interior of the oil pan 70 through the filter 66 and intake port 72, and at a terminal end thereof with the intake passage 58 formed in the pump housing 44 of the oil pump 42.

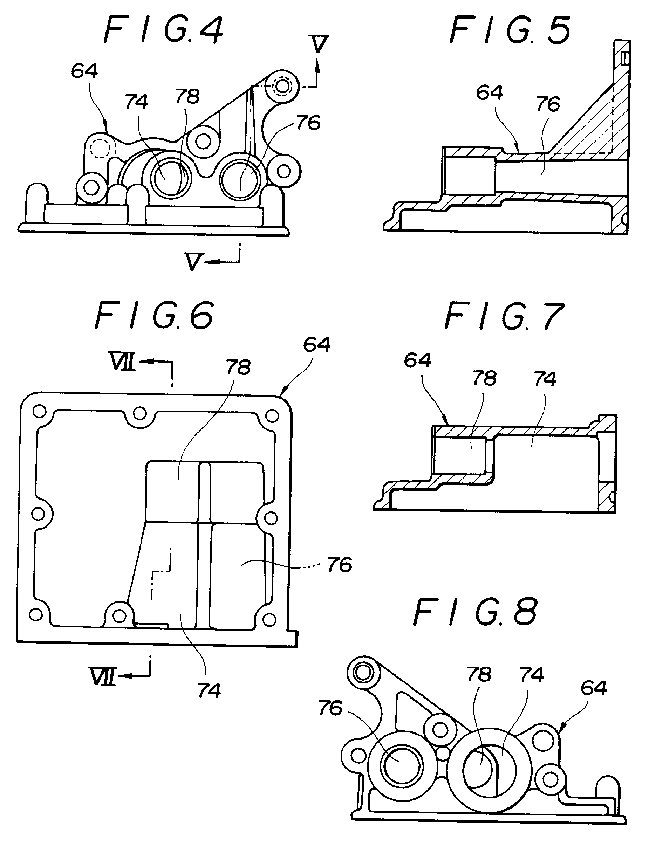

Also, this pump manifold 64, as shown in Figures 4 through 8, is provided with an oil feed passage 76 for feeding oil discharged from the oil pump 42 to the valve body 62, and an oil return passage 78 for returning surplus filtered return oil from the valve body 62 to the oil intake passage 74 on the downstream side of the filter 66.

That is, the oil feed passage 76 communicates at a starting end thereof with the discharge passage 60 of the pump housing 44 and at a terminal end thereof with an oil feed port 82 of the valve body 62 disposed at the second case portion 10 through an oil feed pipe 80. The oil feed passage 76 is disposed in the pump manifold 64 in such a manner as to extend generally perpendicularly between the oil pump 42 and the valve body 62. Also, the oil return passage 78 communicates at a starting end thereof with an oil return portion of the valve body 62 disposed at the second case portion 10 through an oil return pipe 84 and at a terminal end thereof with the oil intake passage 74 on the downstream side of the filter 66. The oil return passage 78 is disposed in such a manner as to be parallel with the oil feed passage 76 on the pump manifold 64. The oil return passage 78, as shown in Figure 1, communicates with the oil intake passage 74 (upper side of the filter 66 in Figure 1) on the downstream side of the filter 66.

Owing to the above-mentioned arrangement, the oil feed passage 76 and the oil return passage 78 are disposed in such a manner as to be generally perpendicular to the valve body 62, parallel with each other, and generally horizontal in the pump manifold 64. Also, the pump manifold 64 is connected to the first case portion 8 through the pump housing 44 and to the second case portion 10 through the oil feed pipe 80 and the oil return pipe 84.

Owing to the above-mentioned arrangement, the transmission 4 takes off driving force from the engine 2 in a desired converted form by feeding and discharging oil fed from the oil pump 42 to the drive side hydraulic oil chamber 36 of the drive side pulley 16 and to the driven side hydraulic oil chamber 38 of the driven side pulley 20. The oil supplied by the oil pump 42 is regulated to a predetermined pressure level by the valve body 62 and communicates with the hydraulic chambers 36 and 38 in order to increase or decrease the rotational radius of the belt 30 thereby consecutively to change the gear ratio.

The transmission 4 is provided with a final output shaft 88 which is rotatably engagable with the outer periphery of the output side shaft 18 through a hydraulic clutch 90. This hydraulic clutch 90 continues or discontinues the supply of driving force outputted by the transmission 4 (i.e. engages or disengages the shafts 18 and 88) in response to feeding or discharging oil to and from the clutch hydraulic oil chamber 92.

### OPERATION

When the oil pump 42 is actuated by the engine 2, oil in the oil pan 70 is taken into the oil intake passage 74 from the intake port 72 of the oil strainer 68, then taken into the intake passage 58 of the pump housing 44 after being filtered by the filter 66, and then discharged into the discharge passage 60 of the pump housing 44 after being compressed in the operating chambers 56. As discussed above, the rotors 46 and 52 are moved in the rotating direction of the arrow A in Figure 2 to expand and contract the size of the operating chambers 56.

The oil discharged to the discharge passage 60 is fed to the valve body 62 from the oil feed passage 76 of the pump manifold 64 through the feed pipe 80. In the valve body 62, oil is regulated to a predetermined pressure level and then fed to a required oil feed part, such as driving side hydraulic oil chamber 36. At the same time, surplus clean return oil generated when the oil was regulated to the predetermined pressure level is returned back to the oil return passage 78 through the oil return pipe 84.

Because this oil return passage 78 communicates with the oil intake passage 74 on the downstream side of the filter 66, the clean return oil is not returned to the oil pan 70, but rather to the intake passage 58, from where it is taken into the oil pump 42.

In this way, the pump manifold 64 is provided with the oil feed passage 76 for feeding oil discharged by the oil pump 42 to the valve body 62, and the oil return passage 78 for returning surplus return oil from the valve body 62 to the oil intake passage 74 on the downstream side of the filter 66. Accordingly, the filtrated clean return oil can be prevented from being mixed with the unfiltered oil in the oil pan. Moreover, the clean return oil is not passed through the filter 66 again.

As a consequence, the filtrated oil can be effectively utilized, and, as shown in Figure 2, the work of drawing clean return oil upward through the distance H can be eliminated and the intake resistance associated with passing the clean return oil through the filter 66 can also be eliminated. Accordingly, the intaking work can be minimized to reduce the torque required for driving the pump. Since the surplus return oil from the valve body 62 is not returned to the oil pan 70, bubbles in the oil pan 70 can be prevented. As a result, pump efficiency is enhanced and noise is reduced. Furthermore, the quantity of oil passing through the filter 66 is obviously reduced. As a consequence, the filter area can be reduced to attain a small size.

Moreover, because the oil feed passage 76 for feeding oil to the valve body 62 from the oil pump 42 and the return oil passage 78 for returning the surplus return oil from the valve body 62 are disposed on the pump manifold 64 in parallel and horizontal relation with each other, the total height of the transmission can be reduced below that of the conventional structure wherein the oil feed passage and the oil return passage are separately disposed. Since the total height can be lowered, and because the first and second case portions 8 and 10 of the transmission case 6 are connected through the pump housing 44, the oil feed pipe 80, the oil return pipe 84, and the pump manifold 64 which is provided with the oil feed passage 76 and the oil return passage 78, the structural strength of the transmission case can be increased.

## Claims

1. A transmission having a case (6) provided with first and second generally parallel and vertically extending case walls (8a, 10a), an oil pump (42) mounted on said first case wall (8a), a valve means for regulating oil discharged by said oil pump to a predetermined pressure level and including a valve body (62), said oil pump (42) being provided with a pump manifold (64) and a filter (66) for filtering oil removed from an oil pan (70) located beneath the transmission, said manifold including an oil intake passage (74) having a starting end which communicates with the interior of the oil pan (70) and a terminating end which communicates with the oil pump through the filter (66), the manifold also including an oil feed passage (76) for feeding oil discharged by said oil pump (42) to said valve body (62) and an oil return passage (78) for returning surplus return oil from said valve body into said oil intake passage (74) downstream of said filter, characterized in that said valve body (62) is mounted on said second case wall (10a) and that said oil feed passage (76) and said oil return passage (78) are respectively defined interiorly of first and second pipes (80,84) which extend generally in parallel and horizontal relationship and which respectively have opposite ends thereof fixedly joined to said pump manifold (64) and said valve body (62).

2. A transmission according to Claim 1, wherein said first and second pipes (80,84) are disposed in sidewardly spaced relation and at an elevation above the filter (66).

## Patentansprüche

1. Getriebe mit einem Gehäuse (6), das mit ersten und zweiten im allgemeinen parallel und vertikal sich erstreckenden Gehäusewänden (8a,10a) versehen ist, einer Ölpumpe (42), die an dieser ersten Gehäusewand (8a) angebracht ist, einer Ventileinrichtung zum Steuern des durch diese Ölpumpe abgegebenen Öls auf ein vorbestimmtes Druckniveau, die einen Ventilkörper (62) aufweist, wobei die Ölpumpe (42) mit einem Pumpenverteiler (64) und einem Filter (66) versehen ist zum Filtern des aus einer unter dem Getriebe angeordneten Ölwanne (70) abgezogenen Öls, wobei dieser Verteiler einen Öleinlaßkanal (74) mit einem vorderen Ende, das mit dem Innenraum der Ölwanne (70) in Verbindung steht, und einem hinteren Ende aufweist, das mit der Ölpumpe über den Filter (66) in Verbindung steht, wobei der Verteiler ferner einen Ölzufuhrkanal (76) zum Zuführen des von der Ölpumpe (42) abgegebenen Öls an den Ventilkörper (62) und einen Ölrücklaufkanal (78) aufweist zum Rückführen von überschüssigem Rücklauföl aus dem Ventilkörper in den Öleinlaßkanal (74) stromabwärts von dem Filter,
dadurch gekennzeichnet,
daß der Ventilkörper (62) an der zweiten Gehäusewand (10a) angebracht ist und daß der Ölzuführungskanal (76) und der Ölrücklaufkanal (78) jeweils innerhalb von ersten und zweiten Leitungen (80,84) ausgebildet sind, die sich im allgemeinen parallel und horizontal erstrecken und deren gegenüberliegende Enden jeweils fest mit dem Pumpenverteiler (64) und dem Ventilkörper (62) verbunden sind.

2. Getriebe nach Anspruch 1, wobei die ersten und zweiten Leitungen (80,84) seitwärts in einem Abstand voneinander und in einer Draufsicht über dem Filter (66) angeordnet sind.

## Revendications

1. Transmission possédant un carter (6) muni de première et deuxième parois de carter (8a, 10a) s'étendant globalement parallèlement et verticalement, une pompe à huile (42) montée sur ladite première paroi de carter (8a), des moyens formant vanne pour réguler l'huile déchargée par ladite pompe à huile à un niveau de pression prédéterminé et comportant un corps de vanne (62), ladite pompe à huile (42) étant munie d'un manifold de pompe (64) et d'un filtre (66) pour filtrer l'huile retirée d'une cuvette collectrice d'huile (70) située en dessous de la transmission, ledit manifold comportant un passage d'entrée d'huile (74) ayant une extrémitée de départ qui communique avec l'intérieur de la cuvette collectrice d'huile (70) et une extrémité de fin qui communique avec la pompe à huile par l'intermédiaire du filtre (66), le manifold comportant également un passage de délivrance d'huile (76) pour délivrer l'huile déchargée par ladite pompe à huile (42) vers ledit corps de vanne (62) et un passage de retour d'huile (75) pour renvoyer le surplus d'huile de retour venant dudit corps de vanne dans ledit passage d'entrée d'huile (74) en aval dudit filtre, caractérisée en ce que ledit corps de vanne (62) est monté sur ladite deuxième paroi de carter (10a) et en ce que ledit passage de délivrance d'huile (76) et ledit passage de retour d'huile (78) sont respectivement définis à l'intérieur de premier et deuxième tuyaux (80, 84) qui s'étendent globalement horizontalement et parallèlement l'un par rapport à l'autre et qui ont respectivement leurs extrémités opposées qui sont réunies de façon fixe audit manifold de pompe (64) et audit corps de vanne (62).

2. Transmission selon la revendication 1, dans laquelle lesdits premier et deuxième tuyaux (80, 84) sont disposés en relation d'espacement latéral et à une certaine hauteur au-dessus du filtre (66).
